# EUROPÄISCHE PATENTSCHRIFT

(11) **EP 2 771 368 B1**
(45) Veröffentlichungstag und Bekanntmachung des Hinweises auf die Patenterteilung: **17.06.2020**
(21) Anmeldenummer: 12791082.6
(22) Anmeldetag: 19.10.2012
(51) Int. Cl.: C08B 15/02, C08L 1/02

(54) **VERFAHREN ZUR GENERIERUNG GETROCKNETER CELLULOSE UND CELLULOSEHALTIGEN MATERIALS SOWIE NACH DIESEM VERFAHREN HERGESTELLTE REQUELLBARE CELLULOSEPRODUKTE**
METHOD FOR GENERATING DRIED CELLULOSE AND CELLULOSE-CONTAINING MATERIAL, AND RESWELLABLE CELLULOSE PRODUCTS PRODUCED BY THIS METHOD
PROCÉDÉ DE PRODUCTION DE CELLULOSE SÉCHÉE ET D'UN MATÉRIAU À BASE DE CELLULOSE, ET PRODUITS CELLULOSIQUES À POUVOIR REGONFLANT OBTENUS SELON LEDIT PROCÉDÉ

(30) Priorität: 25.10.2011 DE 102011117136
(43) Veröffentlichungstag der Anmeldung: 03.09.2014
(73) Patentinhaber: Jenacell GmbH, 07745 Jena (DE)
(72) Erfinder: FISCHER, Dagmar, 07743 Jena (DE); MÜLLER, Astrid, 07745 Jena (DE); HESSLER, Nadine, 96529 Mengersgereuth-Hämmern (DE)
(74) Vertreter: Fuchs Patentanwälte Partnerschaft mbB
(86) Internationale Anmeldenummer: PCT/DE2012/001034
(87) Internationale Veröffentlichungsnummer: WO 2013/060321

(56) Entgegenhaltungen:
- EP-A1- 2 808 346
- WO-A1-2010/069046
- GB-A- 316 580
- GB-A- 799 715
- JP-A- 9 165 402
- M. SEIFERT; S. HESSE; V. KABRELIAN; D. KLEMM: "Controlling the water content of never dried and reswollen bacterial cellulose by the addition off water-soluble polymers to the culture medium", J. POLYM. SCI., PART A: POLYM. CHEM., Bd. 42, 2004, Seiten 463-470, XP002694867, in der Anmeldung erwähnt

## Beschreibung

Die Erfindung betrifft ein Verfahren zur Generierung getrockneter bakteriell synthetisierter Nanocellulose-Vliese (BNC-Vliese).

Solche Celluloseprodukte betreffen beispielsweise den Einsatz in medizinischen (z. B. Implantatmaterial, Wundauflagen, Hautersatzmaterial), pharmazeutischen (beispielsweise Arzneistoffträgersysteme) und technischen Anwendungsbereichen (wie Filter- und Membransysteme).

Allgemein bekannt werden für diese Anwendungsbereiche unterschiedliche Cellulose- und cellulosehaltige Materialien (z. B. Nanocellulosen) eingesetzt, die sowohl pflanzlichen als auch bakteriellen Ursprungs sein können. Dabei kommen die Celluloseprodukte zum Großteil in getrockneter Form zum Einsatz, was bei der Anwendung eine ausreichende Requellfähigkeit erfordert. Für diese Anwendungen ist umfassend bekannt, dass durch die Trocknung die Requellungseigenschaften der verschiedenen Celluloseprodukte negativ beeinflusst werden. Insbesondere die strukturellen Veränderungen, verursacht durch Dehydratisierung infolge von Trocknungsprozessen, stehen hier im Vordergrund.

Dementsprechend beschrieb R. Weingand (GB 316580 A) bereits 1928 eine Behandlung von regenerierter Cellulose mit einer Zuckerlösung zum Erhalt der vorgegebenen Formen nach dem Trocknen. Die so behandelten Cellulosematerialien ermöglichen im Anschluss eine reversible Quellung. Da diese Methode einen Erhalt der Form sowie keine Schrumpfung des Materials voraussetzt, wird bei einem vollständigen Kollaps verbunden mit einer Schrumpfung keine vollständige Requellung erreicht. Insbesondere der durch die Trocknung eintretende Strukturkollaps kann anhand dieser Behandlungsmethode nicht zu einer vollständigen Wiederherstellung der Cellulosestruktur führen. Zudem verweist Weingand auf eine teilweise notwendige Vortrocknung der Cellulose, um eine Verwässerung der Zuckerlösung zu vermeiden. Auch die Tatsache, dass Regeneratcellulose aufgrund des Cellulose-Typs II (natürliche Cellulose aus Typ I) über andere Eigenschaften, wie z. B. Quellverhalten, verfügt, ist eine Anwendbarkeit dieser Methode auf natürliche Cellulosen ausgeschlossen.

Im Vergleich dazu befassten sich mehrere Arbeitsgruppen mit der Verbesserung und Veränderung der Quelleigenschaften der einzelnen Cellulosefasern. Dementsprechend fanden 1936 Dreyfus et al. (GB 453302 A) heraus, dass durch Zusatz von Salzen, wie beispielsweise Natrium- oder Kaliumsalze der Phosphatsäure, Essigsäure bzw. Zitronensäure, oder von Zuckern, wie z. B. Glucose oder Fructose, das Quellvermögen von Celluloseestern in wässrigen Lösungen dahingehend verändert wird, dass anschließende Verseifungsreaktionen mit verschiedenen Aminoreagenzien gesteigert werden können. Jedoch bezieht sich die beschriebene Beeinflussung des Quellvermögens ausschließlich auf die Veränderung von chemisch modifizierten Celluloseestern, welche für weitere Derivatisierungen eingesetzt werden.

Das Patent GB 409916 A offenbart, dass Fasergemische oder auch verschiedene Garne auf Basis von Cellulosederivaten, im besonderen Celluloseacetat, bei Quellung in heißen wässrigen Lösungen Aggregate ausbilden. Durch die Verwendung von Salzen, wie z. B. Natrium- oder Kaliumphosphat bzw. -chlorid, aber auch osmotisch wirkenden Substanzen wird die Aggregatbildung verhindert und ein gleichmäßiges, glänzendes Aussehen gefördert. Jedoch fanden die Anwender heraus, dass die Nutzung von Zuckern dabei keinen Einfluss auf die Quellbarkeit der Cellulosederivate hatte.

Im Gegensatz dazu sprechen W. Stahl und P. Krais (DE 585272 A) bei der Verwendung von hochkonzentrierten Zuckerlösungen oder 20 %igen Calciumchloridlösungen von einem Entwässerungsreagenz von Cellulosederivaten, wodurch die Zusammenlagerung von Hohlräumen zwischen Cellulosefasern begünstigt wird.

Bei allen beschriebenen Methoden zur Steigerung der Quellungseigenschaften wird von Cellulosederivaten und nicht von reinen, natürlichen Cellulosematerialien ausgegangen. Außerdem fand eine anschließende Trocknung sowie erneute Requellung innerhalb dieser Untersuchungen keine Berücksichtigung.

Neben den allgemein bekannten Cellulosematerialien haben in den letzten Jahren vor allem die Nanocellulosen an großer Bedeutung gewonnen. Durch ihre nanoskaligen Strukturen verfügen sie im Vergleich zu bisherigen Cellulosen über innovative Eigenschaften, wie eine große innere Oberfläche und ein sehr hohes Quellvermögen. Auch für eine breite Anwendung dieser Spezialcellulosen, zu denen bakteriell synthetisierte Nanocellulose (BNC) zählt, ist eine Trocknung mit anschließender vollständiger Requellung von großem Interesse.

Die Trocknung von BNC und BNC-haltigen Materialien mittels verschiedener Methoden ist allgemein bekannt, wobei sich allerdings die BNC-Struktur, insbesondere durch Lufttrocknung oder Heißpressen, verändert.

BNC ist im nativen feuchten Zustand ein Hydrogel, welches unter Lufttrocknung einen Strukturkollaps erleidet, der durch oberflächliche Verhornungsprozesse, durch die Aggregation von Einzelfasern, durch das Absinken der Porenanzahl und durch Eintreten von Porenschrumpfung gekennzeichnet ist (C. Clasen, B. Sultanova, T. Wilhelms, P. Heisig, W.-M. Kulicke: Effects of Different Drying Processes on the Material Properties of Bacterial Cellulose Membranes, Macromol. Symp. 244, 2006, 48-58; N. Hessler: Synthese von requellbarer sowie kurzkettiger Bakteriencellulose, Institut für Organische und Makromolekulare Chemie, Friedrich-Schiller-Universität Jena, 2004).

Als etablierte Trocknungsverfahren für BNC-Materialien werden in der Literatur die Gefriertrocknung (beispielsweise N. Hessler, D. Klemm: Alteration of bacterial nanocellulose structure by in situ modification using polyethylene glycol and carbohydrate additives, Cellulose 16, 2009, 899-910; M. Seifert, S. Hesse, V. Kabrelian, D. Klemm: Controlling the water content of never dried and reswollen bacterial cellulose by the addition of water-soluble polymers to the culture medium, J. Polym. Sci., Part A: Polym. Chem. 42, 2004, 463-470), die Lufttrocknung, u. a. auch als Heißluftverfahren, (beispielsweise U. Udhardt, S. Hesse, D. Klemm: Analytical Investigations of Bacterial Cellulose, Macromol. Symp. 223, 2005, 201-212; H.-P. Fink, H. J. Purz, A. Bohn, J. Kunze: Investigation of the Supramolecular Structure of Never Dried Bacterial Cellulose, Macromol. Symp. 120, 1997, 207-217; C. Clasen, B. Sultanova, T. Wilhelms, P. Heisig, W.-M. Kulicke: Effects of Different Drying Processes on the Material Properties of Bacterial Cellulose Membranes, Macromol. Symp. 244, 2006, 48-58), die Kritisch-Punkttrocknung (beispielsweise F. Liebner, E. Haimer, M. Wendland, M.-A. Neouze, K. Schlufter, P. Miethe, T. Heinze: A. Potthast, T. Rosenau, Aerogels from Unaltered Bacterial Cellulose: Application of scCO2 Drying for the Preparation of Shaped, Ultra-Lightweight Cellulosic Aerogels, Macromol. Biosci. 10, 2010, 349-352) und die Vakuumtrocknung (N. Hessler: Synthese von requellbarer sowie kurzkettiger Bakteriencellulose, Institut für Organische und Makromolekulare Chemie, Friedrich-Schiller-Universität Jena, 2004) beschrieben.

Häufig wird im Hinblick auf eine bestmögliche Requellung des getrockneten BNC-Materials ein hoher Strukturerhalt bei der Verwendung der unterschiedlichen Trocknungsverfahren angestrebt. Dabei wird die Gefriertrocknung als Methode mit dem größten Strukturerhalt u. a. von Hessler (N. Hessler: Synthese von requellbarer sowie kurzkettiger Bakteriencellulose, Institut für Organische und Makromolekulare Chemie, Friedrich-Schiller-Universität Jena, 2004) und Klemm et al. (D. Klemm, D. Schumann, U. Udhardt, S. Marsch: Bacterial synthesized cellulose - artifical blood vessels for microsurgery, Prog. Polym. Sci. 26, 2001, 1561-1603) und damit als schonende Trocknungsmethode, welche der Lufttrocknung im Hinblick auf die Konservierung der nativen Polymerstruktur überlegen ist, beschrieben. Jedoch treten auch bei der Gefriertrocknung teilweise Strukturaggregationen (C. Clasen, B. Sultanova, T. Wilhelms, P. Heisig, W.-M. Kulicke: Effects of Different Drying Processes on the Material Properties of Bacterial Cellulose Membranes, Macromol. Symp. 244, 2006, 48-58) ein, wodurch nur eine verminderte Requellung erreicht wird (u.a. M. Seifert, S. Hesse, V. Kabrelian, D. Klemm: Controlling the water content of never dried and reswollen bacterial cellulose by the addition of water-soluble polymers to the culture medium, J. Polym. Sci., Part A: Polym. Chem. 42, 2004, 463-470). Die Kritisch-Punkt-Trocknung mittels Einwirkung von superkritischem Kohlenstoffdioxid bei 40 °C und 100 bar wird von Liebner et al. (F. Liebner, E. Haimer, M. Wendland, M.-A. Neouze, K. Schlufter, P. Miethe, T. Heinze: A. Potthast, T. Rosenau, Aerogels from Unaltered Bacterial Cellulose: Application of scCO2 Drying for the Preparation of Shaped, Ultra-Lightweight Cellulosic Aerogels, Macromol. Biosci. 10, 2010, 349-352) beschrieben. Das so behandelte Material besitzt ähnlich den gefriergetrockneten Proben nur noch eine geringe Restmasse, zeigt jedoch nach der Kritisch-Punkt-Trocknung ausgeprägte strukturelle Veränderungen des Fasernetzwerkes, welche u. a. durch die Ausbildung eines makroporösen Systems mit Porendurchmessern von bis zu 100 µm gekennzeichnet sind. Die von Hessler (N. Hessler: Synthese von requellbarer sowie kurzkettiger Bakteriencellulose, Institut für Organische und Makromolekulare Chemie, Friedrich-Schiller-Universität Jena, 2004) durchgeführte rasterelektronenmikroskopische Auswertung von unter Vakuum bei 60 °C im Trockenschrank getrockneten Proben ergab hinsichtlich der aufgetretenen Strukturveränderungen des erhaltenen getrockneten Materials keine Unterschiede im Vergleich mit der ebenfalls durchgeführten Lufttrocknung. Sowohl bei der beschriebenen Luft- als auch bei der Vakuumtrocknung wurden Verhornungen und Faseraggregationen beobachtet.
Zusammenfassend ist festzustellen, dass bei allen vorgenannten Trocknungsprozessen Strukturverluste durch Veränderung der nativen Porosität und Porenstruktur sowie Aggregationen der Polymerfasern gegeben sind (auch bei der als schonendes Verfahren beschriebenen Gefriertrocknung treten teilweise Aggregationen auf, wenn auch in geringerem Maße als bei der Lufttrocknung). Die besagten Strukturverluste vermindern die Requellfähigkeit des Materials nach der Trocknung.

Ferner ist mit der Trocknung ein hoher Kosten-, Material- und Zeitaufwand (Gefriertrocknungsanlagen, Vakuumpumpen, Thermoschränke) verbunden. Ein weiterer Nachteil der sich aus den genannten Trocknungsverfahren im Hinblick auf die Anwendung des Materials als Arzneistoffträgersystem ergibt, ist die thermische und oder mechanische Belastung von eingesetzten Arznei- und Hilfsstoffen durch die Trocknung.

Eine Methode zur Trocknung, welche einen größtmöglichen Strukturerhalt unter gleichzeitiger Zeit- und Kosteneffizienz ermöglicht, ist der Fachwelt bisher noch nicht bekannt geworden.

Die bei der strukturverändernden Trocknung fehlende Stabilisierung der Nanofasern durch Wasser führt zur Aggregation der Mikro-(Nano-)fasern, was wiederum zu einer Umformung des Porensystems führt. Diese strukturellen Veränderungen behindern das Eindringen und die Aufnahme von Wasser im BNC-Netzwerk. Damit ergibt sich, dass BNC in der besagten luftgetrockneten Form nicht ohne weiteres und ohne starke Verminderung der Wasseraufnahmefähigkeit requellbar ist (C. Clasen, B. Sultanova, T. Wilhelms, P. Heisig, W.-M. Kulicke: Effects of Different Drying Processes on the Material Properties of Bacterial Cellulose Membranes, Macromol. Symp. 244, 2006, 48-58; D. Klemm, D. Schumann, U. Udhardt, S. Marsch: Bacterial synthesized cellulose - artifical blood vessels for microsurgery, Prog. Polym. Sci. 26, 2001, 1561-1603; N. Hessler: Synthese von requellbarer sowie kurzkettiger Bakteriencellulose, Institut für Organische und Makromolekulare Chemie, Friedrich-Schiller-Universität Jena, 2004).

Neben den schon beschriebenen Versuchen zur Modifizierung von Cellulosederivaten pflanzlichen Ursprungs, wurden durch unterschiedliche Bearbeitung von BNC- und anderen nanocellulosehaltigen Materialien Versuche unternommen, die Requellfähigkeit des Materials nach Durchführung einer Trocknung zu erhalten und den Wassergehalt der erhaltenen Proben während der Synthese zu steuern.

Die in situ-Zugabe von verschiedenen Agentien führt dabei zu strukturellen Veränderungen und somit auch zu unterschiedlichen Wassergehalten in den erhaltenen Proben. So beschrieben Seifert et al. (M. Seifert, S. Hesse, V. Kabrelian, D. Klemm: Controlling the water content of never dried and reswollen bacterial cellulose by the addition of water-soluble polymers to the culture medium, J. Polym. Sci., Part A: Polym. Chem. 42, 2004, 463-470) die mögliche Steuerung des Wassergehaltes von feuchter und regequollener gefriergetrockneter BNC durch die Zugabe von Carboxymethylcellulose (CMC), Methylcellulose (MC) und Polyvinylalkohol (PVA) zum Kulturmedium, die im Fall von CMC- und MC-Zugabe zu einem erhöhten Wassergehalt in den untersuchten Proben führte, wohingegen ein vergleichbarer PVA-Zusatz geringere Wassergehalte (reduziertes Wasserrückhaltevermögen) zur Folge hatte. Man erhält bei diesem Verfahren jedoch BNC-Komposite mit einer veränderten Netzwerkstruktur, welche durch den Einbau der wasserlöslichen Polymere in das Fasernetzwerk bzw. eine Beeinflussung der BNC Bildung durch die eingesetzten Zusätze gekennzeichnet ist und aufwendigere Aufreinigungsschritte des erhaltenen Materials, aufgrund eines per Elementaranalyse gefundenen Stickstoffgehaltes, erfordert. Auch führt der diskutierte Gefriertrocknungsschritt, zu einer reduzierten Wasserabsorptionsfähigkeit, was durch den generell höheren Wassergehalt der feuchten Ausgangsproben im Vergleich zu den untersuchten regequollenen gefriergetrockneten Proben, gezeigt wird.

Auch Hessler und Klemm (N. Hessler, D. Klemm: Alteration of bacterial nanocellulose structure by in situ modification using polyethylene glycol and carbohydrate additives, Cellulose 16, 2009, 899-910) fanden durch die Zugabe von u. a. CMC, MC und Stärkederivaten zum Kulturmedium strukturelle Veränderungen des BNC-Netzwerkes als auch eine Beeinflussung der Netzwerkbildung sowie der Requellfähigkeit der gefriergetrockneten Proben.

Insgesamt betrachtet, führen die beschriebenen Verfahren der Requellungssteuerung durch Zugabe von Additiven zum Fermentationsmedium, zur Veränderung des nativen BNC-Netzwerkes. Gleichzeitig treten durch die angewendete Gefriertrocknung auch hierbei Strukturverluste auf, welche sich in einem teilweisen Verlust der Wasseraufnahmefähigkeit durch die Gefriertrocknung und damit in einem verminderten Wasserrückhaltevermögen der regequollenen, gefriergetrockneten BNC im Vergleich zur feuchten BNC widerspiegeln (M. Seifert, S. Hesse, V. Kabrelian, D. Klemm: Controlling the water content of never dried and reswollen bacterial cellulose by the addition of water-soluble polymers to the culture medium, J. Polym. Sci., Part A: Polym. Chem. 42, 2004, 463-470).

Zudem zeigten B. Wei et al. (B. Wei, G. Yang, F. Hong: Preparation and evaluation of a kind of bacterial cellulose dry films with antibacterial properties, Carbohydrate Polymers, 84(1), 2011, 533-538), dass durch die Einführung eines kationischen Tensids auch die Quellbarkeit von getrockneter BNC durch vorherige Behandlung mit einer Benzalkoniumchlorid-Lösung und anschließender Gefriertrocknung gesteigert werden kann. Jedoch handelt es sich auch hierbei um ein strukturveränderndes Verfahren, bei welchem zusätzlich der Aufwand und die Beeinflussung durch eine zweimalige Gefriertrocknung als nachteilig im Hinblick auf eine effiziente, zeit- und kostensparende sowie materialschonende Trocknung zu beurteilen ist.

Aber auch eine chemische Modifizierung der BNC durch eine Veretherung der vorliegenden OH-Gruppen führt zu einer Veränderung des Quellverhaltens. Dementsprechend weist die resultierende Hydroxypropyl-BNC als Verbund mit einem Polytetrafluorethylen(PTFE)-Film ein erhöhtes Requellverhalten nach der Lufttrocknung auf (CN 101591448 A). Dies lässt sich durch die Einführung der Ethergruppen erklären, wodurch die Aufnahme von Wasser infolge der höheren Löslichkeit gesteigert wird.
Bei diesem Verfahren wird jedoch eine chemisch veränderte Cellulose erhalten, welche durch die bei dieser Methode angewendete Gebläsetrocknung zusätzlichen Strukturveränderungen unterliegt (Filmbildung). Gleichzeitig erlauben die beschriebenen Parameter zur chemischen Modifizierung und Trocknung keine Additivierung des Materials vor oder während des Trocknungsprozesses ohne Stabilitäts- und Wirkungsverlust der gegebenenfalls eingebrachten Additive, wie zum Beispiel Arzneistoffe.

Die Notwendigkeit zur Trocknung des im nativen Zustand feuchten Probenmaterials ergibt sich aus den Anforderungen an das Probenmaterial während der Anwendung, dem Transport und der Lagerung. Sowohl das leichtere Probenhandling trockener BNC-Materialien, die höhere Stabilität trockener Proben über längere Lagerungszeiträume (geringere mikrobielle Anfälligkeit) und der geringere Material- und Kostenaufwand für eine entsprechende Verpackung feuchter BNC stellen die Erforderlichkeit eines geeigneten Trocknungsverfahrens mit Requellmöglichkeit heraus. Zusätzlich ergeben sich für spezielle Anwendungserfordernisse, wie beispielsweise der Verwendung des Materials in Wundauflagen für nässende Wunden, besondere Notwendigkeiten zur Steuerung des Feuchtigkeitsgehaltes um eine adäquate Flüssigkeitsaufnahme aus der Umgebung (z. B. Wundexudat) ohne Austrocknung zu ermöglichen. Gleichzeitig muss gewährleistet sein, dass die vorteilhaften Materialeigenschaften der im nativen Zustand feuchten Hydrogele, wie unter anderem eine höhere Stabilität, glatte Oberflächen, und schnelle Wirkstofffreisetzung, bei der BNC-Anwendung möglichst ohne wesentliche Einschränkung konserviert und wiederhergestellt werden können. Da die bisherigen Trocknungsverfahren (selbst bei schonender Trocknung) jedoch zum Strukturverlust des Materials und somit zu einer behinderten Requellung führen, ergeben sich für die Anwendung derartig behandelter Proben in der Praxis erhebliche Nachteile bezüglich des Requellens.

Der Erfindung liegt deshalb die Aufgabe zugrunde, BNC-Vliese mit möglichst geringem zeitlichem und technisch-ökonomischem Aufwand ohne zerstörende Belastung der Cellulose sowie ohne Stabilitäts- und Wirkungsverlust eventueller additiver Stoffe, beispielsweise Arzneimittel, zu trocknen und bei Bedarf nahezu vollständig in die ursprüngliche Struktur und Konsistenz wieder rezuquellen.

Erfindungsgemäß wird diese Aufgabe durch ein Verfahren zur Generierung getrockneter BNC-Vliese gelöst, bei dem das BNC-Vlies dem Einfluss eines Feuchtigkeitsbinders, nämlich einer osmotisch und/oder hygroskopisch wirksamen Lösung, ausgesetzt und nach dessen adsorbierender Einwirkung getrocknet wird.

Im Ergebnis einer solchen Behandlung entstehen getrocknete Celluloseprodukte, welche in der Struktur der Cellulose oder des cellulosehaltigen Materials zum Zweck einer Quellbarkeit derselben unter nahezu vollständiger Wiederherstellbarkeit der ursprünglichen Cellulosestruktur und -konsistenz adsorbierte osmotisch und/oder hygroskopisch wirksame Stoffe des besagten getrockneten Feuchtigkeitsbinders aufweisen.
Die Quellung kann sowohl anisotropisch (ausschließlich Zunahme der Dicke) sowie auch isotropisch (Zunahme aller Parameter Dicke, Breite) erfolgen.

Als Feuchtigkeitsbinder kann dabei eine osmotisch und/oder hygroskopisch wirksame Lösung eingesetzt werden, die insbesondere einzelne Saccharide, Salze, saccharidhaltige bzw. saccharidartige Substanzen, Polyethylenoxide, eine Kombination unterschiedlicher Vertreter dieser feuchtigkeitsbindenden Stoffgruppen und/oder eine Kombination von einem und/oder mehreren Vertretern dieser feuchtigkeitsbindenden Stoffgruppen mit einem oder mehreren Tensiden und/oder einem oder mehreren Konservierungsmitteln enthält.

Neben den hygroskopischen und/oder osmotischen Eigenschaften können die in den feuchtigkeitsbindenden Lösungen enthaltenen Substanzen beispielsweise auch als Kryoprotektoren, Quellmittel, Weichmacher und Viskositätserhöher fungieren.

Die feuchtigkeitsbindende Lösung weist dabei eine Konzentration an osmotisch aktiven und/oder hygroskopischen Substanzen von 0,01 % bis zur Sättigungskonzentration, bevorzugt von 5 - 20 %, auf.

Nach Einwirkung des besagten Feuchtigkeitsbinders wird das BNC-Vlies beliebig und ungeachtet eines sogenannten Strukturkollapses (d. h. Strukturveränderung bzw. -verlust) getrocknet.

Überraschend hat sich dabei gezeigt, dass unter der besagten Einwirkung des Feuchtigkeitsbinders eine beliebige und insbesondere aufwandgeringe Trocknung (selbst mit an sich bekannter Strukturveränderung) durchgeführt werden kann und dennoch, bei Bedarf, eine nahezu vollständige Requellfähigkeit des BNC-Vlieses möglich ist.

Die Einwirkung der feuchtigkeitsbindenden Lösung erfolgt indem die dem adsorbierenden Einfluss derselben auszusetzenden BNC-Vliese in die feuchtigkeitsbindende Lösung getaucht oder mit dieser besprüht, betropft, bepinselt bzw. begossen werden.

Durch die osmotischen und/oder hygroskopischen Eigenschaften des eingesetzten Feuchtigkeitsbinders wird in der BNC-Struktur und an der BNC-Vliesoberfläche in Abhängigkeit vom eingesetzten Agens Feuchtigkeit adsorbiert, die Celluloseeinzelketten des Netzwerkes bei der Trocknung auf Distanz zueinander gehalten und somit flexibel eine Faseraggregation verhindert.

Die während der Inkubation an die BNC-Fasern adsorptiv gebundenen Substanzen ummanteln während der Lufttrocknung die BNC-Einzelstränge durch einen an die jeweilige Substanz assoziierten dünnen Wasserfilm und verhindern damit eine Aggregation der BNC-Einzelstränge. Eine Verhornung des Polymers bei der Lufttrocknung wird somit vermieden.

An der Oberfläche bzw. in den Vliesaußenschichten angelagerte bzw. eingelagerte kristalline Substanzen werden ggf. erst bei Einbringung in das Requellungsmedium angelöst, da in diesen Polymerbereichen der längere Kontakt mit der Außenluft möglicher Weise auch zu einer stärkeren Austrocknung als im Vliesinneren führen wird. Die an der Vliesoberfläche befindlichen getrockneten Kristalle bzw. nichtkristalline Substanzen werden bei Einlage in das Requellungsmedium schnell von Wasser umgeben und gelöst (wenn sie nicht schon von vornherein mit einem Wasserfilm umgeben sind) und ermöglichen dadurch einen Wassereinstrom in die Vliesstruktur sowie eine schnelle Requellung.

Zusätzlich wird durch die Erfindung eine höhere Flexibilität der Celluloseketten des getrockneten BNC-Materials erreicht, was wiederum die Requellung begünstigt.

Auf diese Weise wird ein sogenannter Strukturkollaps während der Trocknung verhindert und die natürliche Porenstruktur und Porosität (Porenanzahl und -größe) der BNC bleiben durch den eingebrachten Feuchtigkeitsbinder weitestgehend erhalten. Es kommt zur Stabilisierung von Faserabständen im BNC-Polymerverbund.

Somit wird auch eine Wasseradsorption durch Kapillareffekte (Kapillarität des getrockneten Polymers) durch Erhalt von Poren und schnellerer Ausbildung von Wasserstoffbrückenbindungen innerhalb des Polymernetzwerkes mittels des eingebrachten Feuchtigkeitsbinders ermöglicht.

Hygroskopizität und osmotische Aktivität des Feuchtigkeitsbinders führen zu einem verstärkten Wassereinstrom bei der Requellung der getrockneten Vliese bis ein Konzentrationsausgleich zwischen im Vlies befindlicher Substanz und Substanz im Requellungsmedium erreicht ist und damit der durch die eingebrachte Substanz verursachte osmotische Druck abgesunken ist.

Allgemeine Beschreibung der eingesetzten Feuchtigkeitsbinder:
- hygroskopische Substanzen (wasserziehend)
- osmotisch aktive Substanzen (osmotische Wirkung, wasserziehend)
- hydrophil, hygroskopisch, auch zahlreiche Hydroxylgruppen
- polare Substanzen
- gute bis sehr gut Löslichkeit

Die Erfindung soll nachstehend anhand von in der Zeichnung dargestellten Ausführungsbeispielen näher erläutert werden.

Es zeigen:
- Fig. 1:: Prinzipdarstellung der Phasen zur Behandlung von Cellulose oder cellulosehaltigem Material zum Trocknen und Requellen nach dem Kultivierungsprozess
- Fig. 2:: Prinzipdarstellung der Phasen zur Behandlung von Cellulose oder cellulosehaltigem Material zum Trocknen und Requellen während des Kultivierungsprozesses
- Fig. 3:: Wiederherstellbarkeit (Prozentangabe) in Abhängigkeit vom eingesetzten Feuchtigkeitsbinder (Glucose bzw. Magnesiumchlorid)
- Fig. 4:: Wiederherstellbarkeit (Prozentangabe) in Abhängigkeit eines zusätzlich zum Feuchtigkeitsbinder eingesetzten Konservierungsmittels (Glucose und Benzalkoniumchlorid) bzw. einer zusätzlich zum Feuchtigkeitsbinder eingesetzten Kombination aus einem Konservierungsmittel und einem Tensid (Glucose und Benzalkoniumchlorid sowie Tween 80)
- Fig. 5:: Spannungs-/Stauchungskurve eines erfindungsgemäß behandelten luftgetrockneten Vlieses nach Requellen im Vergleich zu einer unbehandelten feuchten Standardprobe (Negativkontrolle).

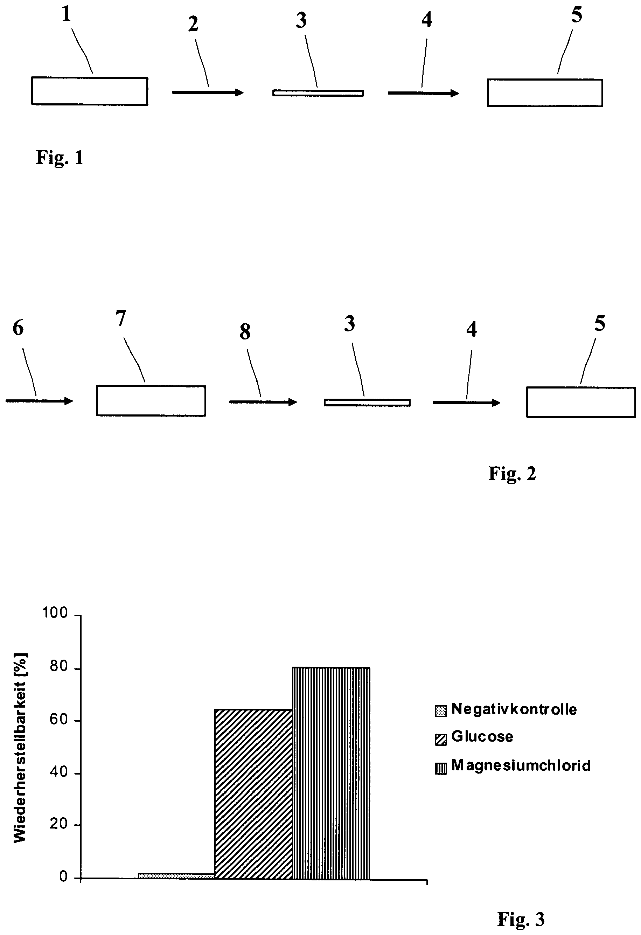

In Fig. 1 sind die Phasen zur Behandlung von Cellulose oder cellulosehaltigem Material zum Trocknen und Requellen nach dem Kultivierungsprozess dargestellt. Eine Cellulose 1 (der Begriff beinhaltet fortan auch allgemein cellulosehaltige Materialien) wird in einem Behandlungs- und Trocknungsprozess 2 zu getrocknetem Material 3 verarbeitet. Bei Bedarf wird das getrocknete Material 3 in einem Requellprozess 4 wieder in regequollenes Material 5 zurückverarbeitet. Der Behandlungs- und Trocknungsprozess 2 schließt die erfindungsgemäße Einwirkung eines in Fig. 1 nicht dargestellten Feuchtigkeitsbinders, wie z. B. ein Saccharid, auf die Cellulose 1 ein, nach welcher die Trocknung der so behandelten Cellulose 1 mit dem Ergebnis des gezeigten getrockneten Materials 3 durchgeführt wird.

Die erfindungsgemäße Behandlung der Cellulose kann bei Herstellung derselben, wie als Übersicht in Fig. 2 gezeigt, auch bereits in deren Kultivierungsprozess erfolgen. Während einer Kultivierung 6 wird Cellulose 7 hergestellt, welche bereits der erfindungsgemäßen Einwirkung eines ebenfalls hier nicht dargestellten Feuchtigkeitsbinders, wie z. B. ein Saccharid, ausgesetzt wurde. Der Begriff Cellulose 7 schließt, wie der besagte Begriff Cellulose 1, fortan auch allgemein cellulosehaltige Materialien ein. Die Cellulose 7 wird einem Trocknungsprozess 8 unterzogen, in dessen Ergebnis das bereits in Fig. 1 gezeigte getrocknete Material 3 entsteht. Dieses kann bei Bedarf wiederum in dem besagten Requellprozess 4 wieder in das regequollene Material 5 zurückverarbeitet werden (vgl. Fig. 1).

### Ausführungsbeispiel 1:

### Standardtrocknungsverfahren und Requellung

Dieses Beispiel beschreibt die erfindungsgemäße Generierung getrockneter Celluloseproben sowie deren Requellbarkeit unter Verwendung von Vliesen, bestehend aus bakterieller Nanocellulose.

Die Vliese wurden in je 10 ml 10 %iger Behandlungslösung, bestehend aus je einem Feuchtigkeitsbinder, für 24 h bei Raumtemperatur und unter leichtem Schütteln (70 rpm) inkubiert. Im Anschluss wurden die Vliese aus der Behandlungslösung entnommen und an der Luft bis zur Massekonstanz getrocknet. Die Requellung der getrockneten Vliese erfolgte in je 20 ml Wasser für Injektionszwecke oder alternativen wässrigen Puffern bei wiederum 70 rpm. Mittels dieses Verfahrens wurden unter gleichen Bedingungen jeweils Vliese mit zum einen Glucose und zum anderen mit Magnesiumchlorid als Feuchtigkeitsbinder behandelt und im Vergleich zu einer Negativkontrolle, bestehend aus einem Vlies, welches ohne Feuchtigkeitsbinder unter den gleichen Bedingungen nur mit Wasser für Injektionszwecke behandelt wurde, untersucht. Die nach 168 h Requellung resultierende Vliesmasse wurde als Maß für das Requellvermögen und die Wiederherstellbarkeit der Vliese als Prozentanteil der Probenausgangsmasse vor der Trocknung angegeben. Die Ergebnisse sind in Fig. 3 als Gegenüberstellung der Wiederherstellbarkeit von mit Glucose und Magnesiumchlorid als Feuchtigkeitsbinder behandelten Vliesen im Vergleich zur Negativkontrolle dargestellt. Nach 168 h Requellung zeigten die mit Feuchtigkeitsbinder behandelten Vliese im Vergleich zur ohne Feuchtigkeitsbinder behandelten Negativkontrolle ein ca. 29-fach höheres Requellvermögen im Fall von Glucose behandelten und ein ca. 36-fach höheres Requellvermögen für die mit Magnesiumchlorid behandelten Vliese und damit eine wesentlich stärkere Requellbarkeit. Es ergibt sich für mit Glucose behandelte Vliese eine Wiederherstellbarkeit von 65 % und für mit Magnesiumchlorid behandelte Vliese eine Wiederherstellbarkeit von 81 % im Vergleich zu einer signifikant geringeren Wiederherstellbarkeit von 2 % für die Negativkontrolle. Dies zeigt die mittels des beschriebenen Verfahrens erhaltene erhöhte Requellbarkeit der erfindungsgemäß mit einem Feuchtigkeitsbinder behandelten Vliese.

### Ausführungsbeispiel 2:

### Zusatz von Konservierungsmitteln und Tensiden

Dieses Beispiel zeigt die erfindungsgemäße Generierung getrockneter Celluloseproben sowie deren Requellbarkeit unter Verwendung von Vliesen, bestehend aus bakterieller Nanocellulose unter Zusatz eines Konservierungsmittels oder einer Kombination aus einem Konservierungsmittel und einem Tensid.

Die Vliese wurden durch das im Ausführungsbeispiel 1 beschriebene Verfahren unter den gleichen Bedingungen mit Glucose als Feuchtigkeitsbinder behandelt, getrocknet und regequollen, wobei die Behandlungslösung neben dem Feuchtigkeitsbinder unterschiedliche Zusätze enthielt. So wurde zum einen Benzalkoniumchlorid (0,03 %) als Konservierungsmittel und zum anderen eine Kombination aus Benzalkoniumchlorid (0,03 %) und Tween 80 (0,5 %) als Tensid der den Feuchtigkeitsbinder enthaltenden Behandlungslösung zugesetzt und die damit erfindungsgemäß unter den gleichen Bedingungen behandelten Vliese untersucht.

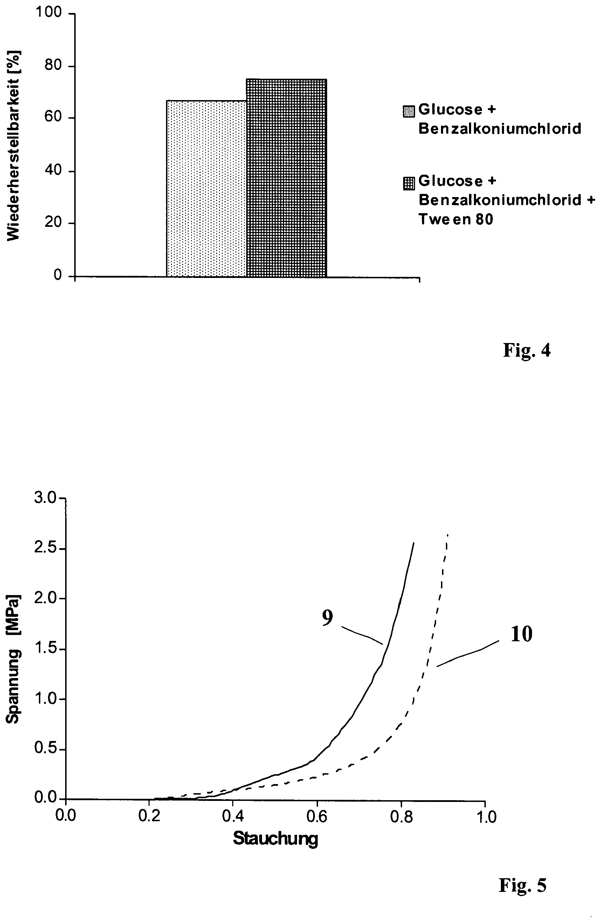

Fig. 4 zeigt die Gegenüberstellung dieser nach beschriebener Trocknung und Requellung unter den gleichen Bedingungen erhaltenen Wiederherstellbarkeit von Vliesen, welche der Behandlungslösung, bestehend aus dem Feuchtigkeitsbinder Glucose und dem Konservierungsmittel Benzalkoniumchlorid, ausgesetzt wurden, im Vergleich zu Vliesen, welche mit der Behandlungslösung, bestehend aus dem Feuchtigkeitsbinder Glucose und einer Kombination aus dem genannten Konservierungsmittel und dem Tensid Tween 80, behandelt wurden. Es ergibt sich nach 168 h Requellung der getrockneten Vliese für die mit der Kombination aus Glucose und Benzalkoniumchlorid behandelten Vliese eine Wiederherstellbarkeit von 67 % und für die mit der Kombination aus Glucose, Benzalkoniumchlorid und Tween 80 behandelten Vliese eine Wiederherstellbarkeit von 75 %. Im Vergleich mit der in Fig. 3 dargestellten Wiederherstellbarkeit von 65 % für Vliese, die unter Verwendung einer Behandlungslösung mit Glucose als Feuchtigkeitsbinder ohne weitere Zusätze sowie unter gleichen Bedingungen behandelt wurden, ergibt sich für Vliese, welche inklusive der genannten Zusätze behandelt wurden, eine etwas höhere Requellbarkeit.

### Ausführungsbeispiel 3:

### Druckfestigkeit

Dieses Beispiel zeigt, wie die Druckfestigkeit eines erfindungsgemäß behandelten Vlieses aus bakterieller Nanocellulose modifiziert werden kann. Das Vlies wurde durch das im Ausführungsbeispiel 1 beschriebene Verfahren mit Glucose als Feuchtigkeitsbinder behandelt, getrocknet und regequollen sowie im Vergleich mit einem unbehandelten feuchten Standardvlies, welches als Negativkontrolle fungierte, unter den gleichen Bedingungen untersucht. Die Druckfestigkeitsmessung der beschriebenen Proben erfolgte nach DIN EN ISO 604:2002.

In Fig. 5 ist die Auswertung über Spannungs-/Stauchungskurven für das mit Glucose erfindungsgemäß behandelte Vlies nach der Requellung im Vergleich zur unbehandelten Negativkontrolle dargestellt. Bei gleicher Spannung ergab sich für das mit Glucose behandelte Vlies eine geringere Stauchung als für das als Negativkontrolle fungierende unbehandelte Vlies. Es resultierte somit für die mit Glucose als Feuchtigkeitsbinder erfindungsgemäß behandelte Probe eine erhöhte Druckfestigkeit bzw. ein höheres strukturbedingtes Wasserrückhaltevermögen im Vergleich zur unbehandelten Negativkontrolle.

### Aufstellung der verwendeten Bezugszeichen

- 1,7 -: Cellulose
- 2 -: Behandlungs- und Trocknungsprozess
- 3 -: getrocknetes Material
- 4 -: Requellprozess
- 5 -: regequollenes Material
- 6 -: Kultivierung von Cellulose 7
- 8 -: Trocknungsprozess
- 9 -: Glucose
- 10 -: Negativkontrolle

## Patentansprüche

1. Verfahren zur Generierung getrockneter bakteriell synthetisierter Nanocellulose-Vliese (BNC-Vliese), bei dem das BNC-Vlies dem adsorbierenden Einfluss eines Feuchtigkeitsbinders ausgesetzt und nach dessen adsorbierenden Einwirkung getrocknet wird, wobei als Feuchtigkeitsbinder eine osmotisch und/oder hygroskopisch wirksame Lösung eingesetzt wird, **dadurch gekennzeichnet, dass** die feuchtigkeitsbindende Lösung in einer Konzentration an osmotisch aktiven und/oder hygroskopischen Substanzen von 0,01 % bis zur Sättigungskonzentration verwendet wird und dass das dem adsorbierenden Einfluss der feuchtigkeitsbindenden Lösung auszusetzende BNC-Vlies in die feuchtigkeitsbindende Lösung getaucht oder mit der feuchtigkeitsbindenden Lösung besprüht, betropft, bepinselt oder begossen wird.

2. Verfahren gemäß Anspruch 1 , **dadurch gekennzeichnet, dass** die als Feuchtigkeitsbinder eingesetzte osmotisch und/oder hygroskopisch wirksame Lösung insbesondere einzelne Saccharide, Salze, saccharidhaltige oder saccharidartige Substanzen, Polyethylenoxide, eine Kombination unterschiedlicher Vertreter dieser feuchtigkeitsbindenden Stoffgruppen und/oder eine Kombination von einem und/oder mehreren Vertretern dieser feuchtigkeitsbindenden Stoffgruppen mit einem oder mehreren Tensiden und/oder einem oder mehreren Konservierungsmitteln enthält.

3. Verfahren gemäß Anspruch 1 , **dadurch gekennzeichnet, dass** zur weiteren Beeinflussung des Requellverhaltens zusätzlich zum Feuchtigkeitsbinder eine Tensid und/oder konservierungsmittelhaltige Lösung eingesetzt wird.

4. Verfahren gemäß Anspruch 2, **dadurch gekennzeichnet, dass** die feuchtigkeitsbindende Lösung in einer Konzentration an osmotisch aktiven und/oder hygroskopischen Substanzen von 5 - 20 %, verwendet wird.

5. Verfahren gemäß Anspruch 2 und 3, **dadurch gekennzeichnet, dass** die in Kombination mit der osmotisch und/oder hygroskopisch wirksamen Lösung eingesetzten Tenside und/oder Konservierungsmittel in einer Konzentration von 0,01 % bis zur Sättigungskonzentration, bevorzugt von 0,01 - 10 %, verwendet werden.

6. Verfahren gemäß Anspruch 1 , **dadurch gekennzeichnet, dass** das mit dem Feuchtigkeitsbinder behandelte BNC-Vlies luftgetrocknet wird.

7. Verfahren gemäß Anspruch 1 , **dadurch gekennzeichnet, dass** das mit dem Feuchtigkeitsbinder behandelte BNC-Vlies vakuumgetrocknet wird.

## Claims

1. A method for generating dried bacterially synthesized nanocellulose non-woven sheets (non-woven BNC sheets), wherein the non-woven BNC sheet is subjected to the adsorbing influence of a humidity binder and subsequently to its adsorbing influence it is dried, wherein as humidity binder an osmotically and/or hygroscopically effective solution is used, **characterized in that** the humidity binding solution is used in a concentration of osmotically active and/or hygroscopic substances of 0.01 % up to the saturation concentration and that the non-woven BNC sheet to be subjected to the adsorbing influence of the humidity binding solution is immersed into the humidity binding solution or the humidity binding solution is sprayed, dropped, brushed or poured onto it.

2. The method according to claim 1, **characterized in that** the osmotically and/or hygroscopically effective solution used as humidity binder in particularly contains single saccharides, salts, saccharide containing or saccharide-like substances, polyethylene oxides, a combination of different members of these humidity binding groups of substances and/or a combination of one and/or more members of these humidity binding groups of substances with one or more surfactants and/or one or more preservatives.

3. The method according to claim 1, **characterized in that** for further influencing the reswelling behavior in addition to the humidity binder a surfactant and/or preservative containing solution is used.

4. The method according to claim 2, **characterized in that** the humidity binding solution is used in a concentration of osmotically active and/or hygroscopic substances of 5 - 20 %.

5. The method according to claim 2 and 3, **characterized in that** the surfactants and/or preservatives used in combination with the osmotically and/or hygroscopically effective solution are used in a concentration of 0.01 % up to the saturation concentration, preferably of 0.01 - 10 %.

6. The method according to claim 1, **characterized in that** the non-woven BNC sheet being treated with the humidity binder is air-dried.

7. The method according to claim 1, **characterized in that** the non-woven BNC sheet being treated with the humidity binder is vacuum-dried.

## Revendications

1. Procédé de génération de non-tissés de nano-cellulose synthétisés par des bactéries et séchés (non-tissés BNC), procédé dans lequel le non-tissé BNC est soumis à l'effet d'adsorption d'un absorbeur d'humidité et est séché après l'action d'adsorption de celui-ci, une solution efficace sur le plan osmotique et/ou hygroscopique étant utilisée comme absorbeur d'humidité, **caractérisé en ce que** la solution d'absorbeur d'humidité est utilisée à une concentration de substances osmotiquement actives et/ou hygroscopiques allant de 0,01 % jusqu'à la concentration de saturation et **en ce que** le non-tissé BNC à soumettre à l'effet d'adsorption de la solution d'absorbeur d'humidité est immergé dans la solution d'absorbeur d'humidité ou est arrosé, mouillé goutte à goutte, badigeonné ou aspergée avec la solution d'absorbeur d'humidité.

2. Procédé selon la revendication 1, **caractérisé en ce que** la solution efficace sur le plan osmotique et/ou hygroscopique, qui est utilisée comme absorbeur d'humidité, contient en particulier individuellement des saccharides, des sels, des substances contenant des saccharides ou analogues à des saccharides, des polyoxydes d'éthylène, une combinaison de différents représentants de ces groupes de substances d'absorbeurs d'humidité et/ou une combinaison d'au moins un des représentants de ces groupes de substances d'absorbeurs d'humidité avec au moins tensioactif et/ou au moins un conservateur.

3. Procédé selon la revendication 1, **caractérisé en ce qu'**une solution contenant un tensioactif et/ou un conservateur est utilisée, en plus de l'absorbeur d'humidité, pour encore influer sur le comportement de gonflement.

4. Procédé selon la revendication 2, **caractérisé en ce que** la solution d'absorption d'humidité est utilisée à une concentration de substances osmotiquement actives et/ou hygroscopiques de 5 à 20 %.

5. Procédé selon la revendication 2 et 3, **caractérisé en ce que** les tensioactifs et/ou conservateurs utilisés en combinaison avec la solution efficace sur le plan osmotique et/ou hygroscopique sont utilisés à une concentration allant de 0,01 % jusqu'à la concentration de saturation, de préférence de 0,01 à 10 %.

6. Procédé selon la revendication 1, **caractérisé en ce que** le non-tissé BNC traité avec l'absorbeur d'humidité est séché à l'air.

7. Procédé selon la revendication 1, **caractérisé en ce que** le non-tissé BNC traité avec l'absorbeur d'humidité est séché sous vide.
